# EUROPEAN PATENT SPECIFICATION

(11) **EP 4 175 334 B1**
(45) Date of publication and mention of the grant of the patent: **20.08.2025**
(21) Application number: 21205668.3
(22) Date of filing: 29.10.2021
(51) Int. Cl.: H04W 64/00, H04W 4/80, G01S 5/00, G01S 5/02, H04W 4/021, H04W 84/18, H04W 76/28, H04W 52/02, H04W 88/06, H04W 72/12

(54) **METHOD FOR HYBRID LOCALIZATION IN A FIRST AREA AND IN A SECOND AREA AND DEVICE THEREFORE**
VERFAHREN ZUR HYBRIDEN LOKALISIERUNG IN EINEM ERSTEN BEREICH UND IN EINEM ZWEITEN BEREICH UND VORRICHTUNG DAFÜR
PROCÉDÉ DE LOCALISATION HYBRIDE DANS UNE PREMIÈRE ZONE ET DANS UNE SECONDE ZONE ET DISPOSITIF CORRESPONDANT

(43) Date of publication of application: 03.05.2023
(73) Proprietor: u-blox AG, 8800 Thalwil (CH)
(72) Inventor: Karlsson, Peter, 8800 Thalwil (CH); Lu, Sylvia, 8800 Thalwil (CH); Thiel, Andreas, 8800 Thalwil (CH)
(74) Representative: Epping - Hermann - Fischer

(56) References cited:
- KR-A- 20190 056 633
- US-A1- 2010 008 338
- US-A1- 2011 243 047
- US-A1- 2016 269 860
- US-A1- 2020 128 482
- TOASA FABRICIO A ET AL: "Experimental Demonstration for Indoor Localization Based on AoA of Bluetooth 5.1 Using Software Defined Radio", 2021 IEEE 18TH ANNUAL CONSUMER COMMUNICATIONS & NETWORKING CONFERENCE (CCNC), IEEE, 9 January 2021 (2021-01-09), pages 1 - 4, XP033885426, DOI: 10.1109/CCNC49032.2021.9369638

## Description

The present disclosure relates to the field of localization. Specifically, the present application is directed to a method for hybrid localization in a first area and in a second area and a device.

In some use cases it may be desirable to track the location of items in different areas. In each area a different location technology may be employed. Such location technologies include, for example, Global Navigation Satellite System, GNSS, short range communication technologies like Bluetooth, ZigBee or ultra-wideband, UWB, or mobile telecommunication technologies like 3G, 4G, 5G and beyond 5G. The accuracy of the localization may differ between the different technologies. For several application scenarios seamless tracking of assets moving between areas offering different location or localization technologies is required. Additionally, the accuracy of localization should be as high as possible.

Existing solutions combine for instance a cellular modem with a dedicated Bluetooth Low Energy, BLE, transceiver or a BLE transmitter. However, the form factor of these solutions is relatively large.

US 2016/269860 A1 refers to device localization in crowded indoor locations. The approach is based on localization using Time of Flight, ToF, measurements in Wi-Fi environments. A location sharing mechanism using BLE complements device localization and avoids Access Point overload caused by too many ToF sessions.

US 2010/008338 A1 describes a system for high transmission power using a shared BT and WLAN front end module. In said module a single power amplifier and a single antenna are respectively shared between the BT and WLAN radio cores.

An objective can therefore be seen in providing a method for hybrid localization and a device which mitigate the shortcomings of the known solutions.

The objective is achieved by the subject-matter of the independent claims. Embodiments and developments are defined in the dependent claims.

A first aspect of the invention comprises a method for hybrid localization in a first area and in a second area as set forth in claim 1. The method is executed by a device and comprises the following steps:
operating a device in a first mode of operation, while the device is in the first area in which a wireless communication is available,
detecting that the device transitions from the first area to the second area in which a short range radio signal transmission is available, and
switching the device to a second mode of operation upon detection that the device transitions from the first area to the second area,
wherein in the first mode of operation the device uses a first technology for localization, and
wherein in the second mode of operation the device uses at least a second technology for localization in which the device emulates the short range radio signal transmission during at least one idle period of the wireless communication, and
wherein in the second mode of operation, the device emulates BLE positioning during the at least one idle period of the wireless communication by sending at least one Bluetooth direction finding packet during the at least one idle period of the wireless communication.

According to the method for hybrid localization the device operates in a first mode of operation while being in the first area in which wireless communication is provided. Wireless communication may also be denoted as cellular communication. As soon as a transit to the second area is detected, the device switches to the second mode of operation. In this second mode the device emulates the short range radio signal transmission during at least one idle period of the wireless communication. In this emulation the device imitates the short range radio signal transmission which is used for localization during one or more idle periods of the wireless communication.

While emulating the short range radio signal transmission, the device reuses its means for implementing the wireless communication when the wireless communication is idle. Therefore, no extra means are required for the second mode of operation, for example hardware-wise. The device thus can be implemented with a smaller form factor and reduced costs.

Short range radio signal transmission comprises Bluetooth, Wireless Local Area Network, WLAN, according to IEEE 802.11x, Thread, ultra-wideband, UWB, or 5G New Radio, 5G NR, especially the 5G NR air interface, for example. The frequency or frequencies employed for the short range radio signal transmission is compatible with, i.e. in the range of, the frequency or frequencies employed in the wireless communication.

For example, BLE 5.1 or a further development thereof is emulated by the device. In BLE 5.1 the device's position may be calculated according to the angle of arrival, AoA, principle. For this AoA localization the device imitates a tag, which sends short range radio signals to a so-called anchor point. The anchor point performs a measurement of the phase of the received short range radio signals as known to those skilled in the art.

In another example not falling under the scope of the claims, UWB positioning, e.g. as defined in IEEE 802.15.x is emulated. For this, range estimations using Time of Arrival, ToA, and/or Time Difference of Arrival, TdoA, as well as AoA are emulated similar to the above described BLE emulation.

In another example not falling under the scope of the claims, WLAN positioning is emulated. This is also known as WiFi positioning and is based on received signal strength indicators, RSSI, as known to those skilled in the art.

This means that during the at least one idle period of the wireless communication the device transmits at least one Bluetooth direction finding packet, which is an advertisement message for the anchor point. For the anchor point said direction finding packets look like standard BLE 5.1 advertisement messages. For the AoA calculation in the BLE anchor points multiple antennas detect direction finding packets and calculate the angle of the incoming signals. A positioning engine, which may be implemented as an edge server or within a cloud, converts the angles provided by the anchor points and possibly additionally provided received signal strength, RSSI, measurements to devise the position of the device.

Due to the emulation of the Bluetooth direction finding packets the device imitates the behaviour of a standard compatible BLE 5.1 tag without needing a BLE 5.1 specific hardware. This reduces the form factor of the device and also the bill of material.

In a development, the at least one idle period of the wireless communication is a timespan during which no transmission on the wireless communication occurs.

The idle period may also be called a grace period or a guard period. It is a period of inactivity or non-activity of the wireless communication. This period is used for sending the direction finding packets. In other words, during the at least one idle period of the wireless communication the device does not transmit or send any wireless or cellular communication related messages. Rather, during this period the short range radio signal transmission, i.e. transmitting or sending by the device of short range radio signal transmission messages, is emulated.

In a development the idle period of the wireless communication conforms to a discontinuous reception, DRX, or an enhanced/extended DRX, eDRX, a connected mode DRX, cDRX, or a power save mode, PSM, or a wake-up signal period.

DRX, eDRX, cDRX, PSM and wake-up signal period conform to the definitions of respective standards, for example, as provided by the third generation partnership project, 3GPP.

According to a development, the device employs a wireless modem implementing wireless bidirectional communication according to a standard for the wireless communication, e.g. as defined by the 3GPP. In the second mode of operation the device employs said wireless modem for sending at least one Bluetooth direction finding packet during the idle period. The at least one Bluetooth direction finding packet comprises a constant tone extension, CTE, and a packet data unit, PDU.

After detection of a transition from the first area to the second area, the device switches to the second mode of operation and reuses the wireless modem for sending Bluetooth direction finding packets during idle periods of the wireless modem. Direction finding packets are sent on frequency channels according to BLE 5.1 according to which the device uses connection-less periodic advertising, PA, to send data.

The resulting device can be implemented with a compact form factor and still realizes seamless transition between the first and the second area.

In the first and second mode of operation the device may or may not communicate using the wireless modem according to the standard for wireless communication as known to those skilled in the art.

In an exemplary embodiment implementation of the proposed method, the first area may be an outdoor environment, for example, while the second area may be an indoor environment, for example. In this example, outdoors cellular communication, e.g. 4G is available, while indoors Bluetooth connectivity, especially BLE positioning is provided.

In a development a duration of the idle period is adjusted by way of negotiation.

In one possible implementation, the device transitions from the first area to the second area and starts operation in the second mode of operation. The device negotiates with the network when and how long the wireless modem may sleep. The transmitter circuitry of the wireless modem is not employed for sending any message over the wireless communication for the time period agreed upon with the network. A minimum length of this period is an interval that is needed for the Bluetooth direction finding packet transmission. During this time, the wireless modem, e.g. its receiver circuitry, can but does not have to listen to or receive messages on the wireless communication channels, for example paging messages or downlink, DL, control messages.

According to an alternative implementation, upon entering the second mode of operation, the device requests PSM with the network by additionally indicating an amount of time for the PSM. The desired value is once again the time which is needed for a BLE advertising channel transmission plus a duration for waking up the transmitter part or circuitry of the wireless modem.

In a development the method further comprises the step of detecting that the device transitions from the second area to the first area and subsequently switches from the second mode of operation to the first mode of operation.

Upon detection of a transition from the second area back to the first area, the second mode of operation is turned off and the device returns to the first mode of operation. Consequently, the emulation of the short range radio signal transmission is only active when needed in the second mode of operation, which saves power.

In a development the detection that the device transitions between the first area and the second area comprises an evaluation of a Cell Identification, CellID, or using a geo-fence service or using a radio frequency, RF, fingerprinting or using a GNSS service.

Also a combination of these different possibilities may be employed, as known to those skilled in the art.

According to a development the first technology for localization comprises at least one of the following: a GNSS, a cellular telecommunication technology, a wireless communication technology.

Cellular telecommunication and wireless communication technologies are typically defined in standard bodies like the 3GPP or the International Telecommunication Union, ITU. Cellular communication technologies may comprise 2G, 3G, 4G, 5G and beyond 5G. A wireless communication technology may comprise WLAN, or WiMAX.

A second aspect of the invention comprises a device for hybrid localization in a first area and in a second area as set forth in claim 9. The device is configured to operate in a first mode of operation while the device is in a first area in which a wireless communication is available. The device is further configured to operate in a second mode of operation while the device is in a second area in which a short range radio signal transmission is available. Therein, in the first mode of operation the device is configured to use a first technology for localization and in the second mode of operation the device is configured to use at least a second technology for localization. Therein, the second technology comprises emulating the short range radio signal transmission during at least one idle period of the wireless communication. Therein, in the second mode of operation, the device is configured to emulate BLE positioning during the at least one idle period of the wireless communication by sending at least one Bluetooth direction finding packet during the at least one idle period of the wireless communication

The device provides for seamless hybrid localization in the first area and in the second area. Upon transition from the first to the second area the device switches to the second mode of operation and uses at least the second technology for localization in which the short range radio signal transmission during an idle period of the wireless communication is emulated. The device can thus be realized with a reduced form factor compared with state of the art implementations.

In a development the device comprises a wireless modem and a processing unit. The wireless modem is configured to provide a bidirectional wireless communication capability according to a wireless communication standard, e.g. as defined by the 3GPP, in the first mode of operation. The processing unit is configured to provide at least one packet having localization enabling information to the wireless modem in the second mode of operation, the packet conforming to the short range radio signal transmission.

The wireless communication standard that is implemented by the wireless modem conforms, for example, to the LTE-M specification. In the second mode of operation the processing unit prepares the at least one packet which enables localization of the device, and provides this packet to the wireless modem. For the emulation in the second mode of operation, the wireless modem is reused for sending this packet.

In a development the packet comprises the at least one Bluetooth direction finding packet according to a BLE standard. The wireless modem is configured to provide a baseband transmission capability for the Bluetooth direction finding packet, to provide up conversion for the direction finding packet to at least one Bluetooth advertising frequency channel, and to provide an output power to the up converted Bluetooth direction finding packet according to the BLE standard.

BLE uses the 2.45 GHz ISM band which is also within the RF bandwidth of the wireless communication, especially of the cellular telecommunication. The wireless modem provides the adequate output power to the up converted Bluetooth direction finding packet, for instance, according to the BLE 5.1 as defined by the Bluetooth SIG.

In a development the device is implemented in a single chip.

Due to the emulation of the short range radio signal transmission which renders the presence of a dedicated hardware component, for example a dedicated BLE System-on-Chip, SoC, redundant, realization of the device within a single chip is possible.

In a development the device is free from a dedicated short range radio signal transmission modem, especially a Bluetooth low energy modem.

In other words, the device does not have a BLE modem. The device is implemented without a dedicated BLE modem and still the device can provide for hybrid localization in the first and in the second area in a seamless way.

The text below explains the proposed method and device in detail using exemplary embodiments with reference to the drawings. Components and circuit elements that are functionally identical or have an identical effect bear identical reference numbers. Insofar as circuit parts or components correspond to one another in their function, a description of them will not be repeated in each of the following figures. Therein,
Figure 1 shows an exemplary embodiment of a method as proposed,
Figure 2 shows an exemplary embodiment of a device as proposed,
Figure 3 shows an exemplary timing diagram for the method and the device as proposed,
Figure 4 shows an exemplary packet for short range radio signal transmission, and
Figure 5 shows an exemplary scenario for hybrid localization.

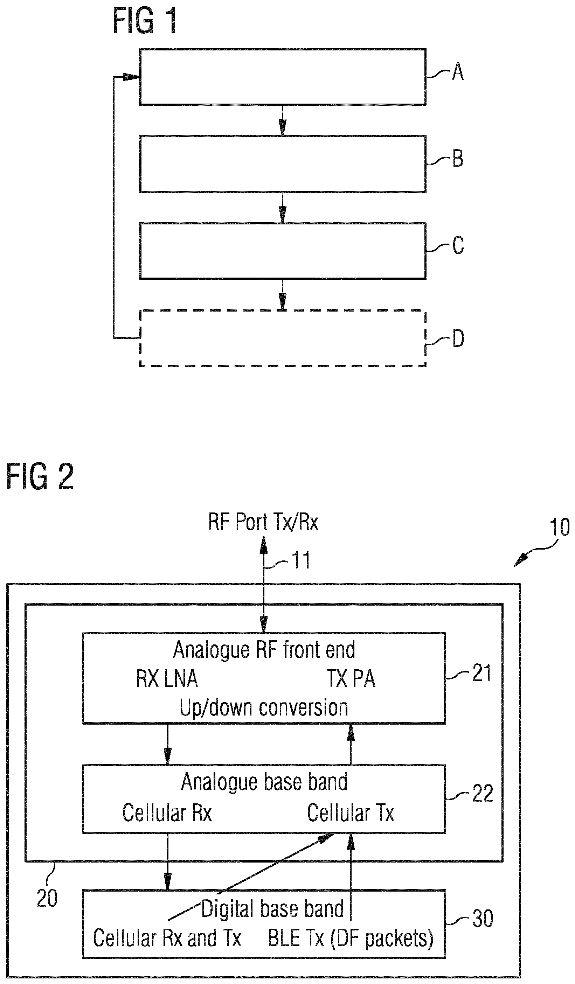

Figure 1 shows an exemplary embodiment of a method as proposed.

The method for hybrid localization in a first area and in a second area comprises the following steps:
A: operating a device in a first mode of operation, while the device is in the first area in which wireless communication is available,
B: detecting that the device transitions from the first area to the second area in which short range radio signal transmission is available,
C: switching the device to a second mode of operation upon detection that the device transitions from the first area to the second area.

Therein in the first mode of operation the device uses a first technology for localization. In the second mode of operation the device uses at least a second technology for localization in which the device emulates short range radio signal transmission during at least one idle period of the wireless communication.

In step A the device operates in the first mode of operation using the first technology for localization, while being in the first area, or environment, or location. In the first area wireless communication is available. Consequently, the device is engaged in bidirectional wireless communication, especially in bidirectional cellular communication, for example according to a 3GPP standard like LTE, transmitting and receiving messages to and from a base station. For localization the first technology is used, for instance, a cellular or wireless communication technology, or a separate GNSS service.

In step B the device detects a transition to the second area in which the short range radio signal transmission, for example Bluetooth, especially BLE 5.1, is available. For this detection one or more of the following mechanisms may be employed: evaluating the cell ID, using a geo-fencing service, using RF fingerprinting or relying on the GNSS data.

In step C the device switches to the second mode of operation and starts emulating the short range radio signal transmission during one or more idle periods of the wireless communication. For example, BLE 5.1 direction finding packets are sent in periods in which no transmission on the wireless communication, or cellular communication, occurs. For these idle periods either discontinuous reception, DRX, or enhanced/extended DRX, eDRX, or cDRX as defined in 3GPP standards, or power save mode, PSM, or a wake-up signal duration is employed. Optionally, a duration of said idle period is adjusted by way of negotiation at the beginning of step C, i.e. while entering the second mode of operation. Subsequently, one or more BLE direction finding packets are sent out by the device using the cellular communication means.

In other words, in the second mode of operation the device emulates a BLE 5.1 tag.

By reusing the wireless or cellular communication capability already implemented in the device for short range radio signal transmission like BLE, the form factor and bill of material of the device are reduced.

Optionally, the method may also comprise step D in which the device detects a transition from the second area back to the first area, turns off the second mode of operation and returns to the first mode of operation. As in the first area localization using the short range radio signal transmission is not available, e.g. due to lack of Bluetooth coverage, the BLE 5.1 emulation can be stopped.

By using the short range radio signal transmission for localization, the accuracy of the localization can be improved.

Figure 2 shows an exemplary embodiment of a device as proposed. The device 10 is configured to be operated in the first mode of operation while the device 10 is in a first area in which wireless communication is available. The device 10 is further configured to be operated in the second mode of operation while the device 10 is in the second area in which short range radio signal transmission is available. In the first mode of operation the device is configured to use a first technology for localization. In the second mode of operation the device 10 is configured to use at least a second technology for localization. The second technology comprises emulating short range radio signal transmission during at least one idle period of the wireless communication.

In an exemplary implementation the device 10 is configured to execute the method as proposed, for example the method as depicted in Figure 1.

According to one implementation possibility which is depicted in Figure 2, the device 10 comprises a wireless modem 20 and a processing unit 30. The wireless modem 20 is configured to provide bidirectional wireless communication capabilities according to a wireless communication standard, e.g. as defined by the 3GPP, at least in the first mode of operation.

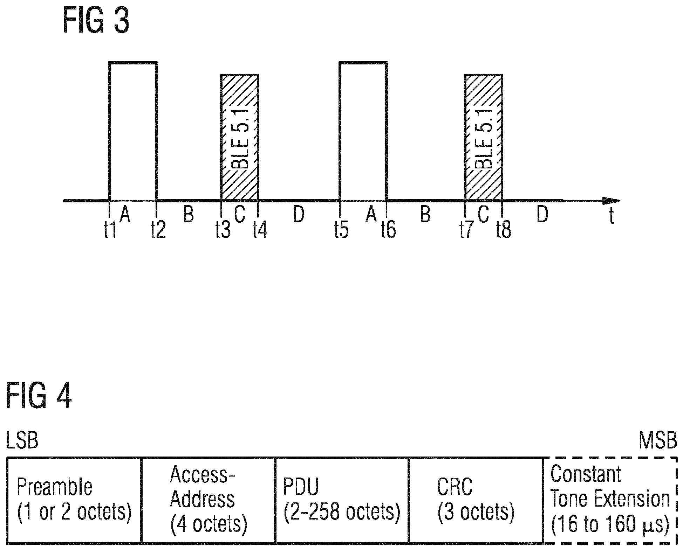

Said wireless communication standard comprises, for example, a cellular communication standard, like 3G or LTE/4G. The processing unit 30 is configured to provide at least one packet having localization enabling information to the wireless modem 20 in the second mode of operation. The packet conforms to the short range radio signal transmission. An example of such a packet is depicted in Figure 4 and will be described further below.

The processing unit 30 may furthermore fulfil the tasks of a digital baseband circuit as known by those skilled in the art. The processing unit 30 may be implemented as a software module or component.

In the example of Figure 2 the wireless modem 20 is implemented by an analogue front end circuit 21 and an analogue baseband circuit 22, which are connected to each other.

Furthermore, in the example of Figure 2 the device 10 has an RF port 11 for connecting an antenna.

The wireless modem 20 provides wireless or cellular transmission capabilities in the second mode of operation and also optionally in the first mode of operation. For this, the analogue baseband circuit 22 performs cellular transmission and reception of packets provided by the processing unit 30. Additionally, in the second mode of operation for the emulation the analogue baseband circuit 22 provides analogue baseband transmission capabilities in accordance with the wireless communication technology for the short range radio transmission, i.e. for the Bluetooth direction finding packets using, amongst others, digital-to-analogue converters. The analogue front end circuit 21 realizes the functions of an analogue radio frequency front end as known to those skilled in the art for providing wireless, especially cellular bidirectional communication functionality. In addition, the analogue front end circuit 21 in the second mode of operation provides up conversion of BLE 5.1 packets to the BLE advertising frequency channels, e.g. in the 2.45 GHz ISM band, and appropriate output power as required by the BLE 5.1 specification.

In short, in the second mode of operation the transmitter chain or transmitter, Tx, functionality as represented by the analogue baseband circuit 22 and the analogue front end circuit 21 is reused for transmission of BLE 5.1 direction finding packets during the emulation.

In more detail, an oscillator which forms part of the analogue front end circuit 21 is tuned to each of the three Bluetooth advertising channels for sending direction finding packets in DRX or eDRX periods or during power save mode of the cellular telecommunication technology.

In other words, in the second mode of operation, the wireless modem 20 transmitter circuitry is not used for transmission of wireless communication related messages, but for sending packets according to the short range radio signal transmission. The receiver circuitry of the wireless modem 20 may or may not be switched off in the second mode of operation and may or may not listen to or receive messages on the wireless communication channels, for example paging messages or downlink, DL, control messages. In case frequency bands used for the wireless communication and the short range radio transmission do not overlap, which is the case when using LTE for wireless communication and BLE, especially BLE operating in 2,4 GHz frequency band, for short range radio signal transmission, the receiver circuitry of the wireless modem 20 may remain on. In case the frequencies overlap, which is the case, for instance, when using LTE for wireless communication and WiFi or UWB for short range radio signal transmission, the receiver circuitry of the wireless modem 20 shall be switched off. For example, the band from 5.1 GHz up 7.1 GHz is mainly used for WiFi and UWB, but also for LTE as well as emerging 5G NR-U.

Figure 3 shows an exemplary timing diagram for the method and the device as proposed. Activity of the device, especially the wireless modem, is shown in relation to time t. Method steps A, B, C and D are also depicted on the time axis.

Between approximately point in time t1 and point in time t2 the device is operated in the first mode of operation performing method step A. The wireless modem may be engaged in bidirectional cellular communication as described above. At an instance between point in time t2 and point in time t3 transition from the first area to the second area is detected according to method step B. Consequently, at point in time t3 according to method step C the second mode of operation is switched on and emulation of the short range radio signal transmission is started. The period or timespan between point in time t3 and point in time t4 represents an idle period of the wireless or cellular communication which is reused for sending one or more BLE 5.1 direction finding packets. At an instance between point in time t4 and point in time t5 the device detects transition from the second area to the first area and turns off the emulation to operate in the first mode of operation according to method step D. Between points in time t5 and t6 another period of executing the first mode of operation follows with communication activity on the wireless or cellular communication network, i.e. information exchange with, for example, a base station. Between points in time t6 and t7 transition from the first area to the second area is detected once again and method step B is performed. Between points in time t7 and t8 the device operates in the second mode of operation emulating a BLE 5.1 tag's behavior in accordance with method step C. After point in time t8 the device detects another transition back to the first area and reenters into the first mode of operation as defined in method step D.

Similarly, a guard period of LTE-M or narrow band internet of things, NB-IoT, may be used for transmission of Bluetooth 5.1 direction finding packets.

Figure 4 shows an exemplary packet for short range radio signal transmission. Especially the structure of a BLE 5.1 direction finding packet is depicted. Starting from the left side with the least significant bit, LSB, to the right side with the most significant bit, MSB, the packet has a preamble of one or two octets, an access address of 4 octets, a packet data unit, PDU, having 2 to 258 octets, a cyclic redundancy check, CRC, having three octets, and a constant tone extension, CTE, of 16 to 160 microseconds.

It can be discerned that the direction finding packet appends a CTE to the data provided with the PDU. The CTE has a constant frequency at the carrier frequency of the advertisement channel employed plus 250 KHz. The minimum time to send a direction finding packet is mainly based on the preamble and access address, not on the CTE time length. The CTE therein is an example for the localization enabling information.

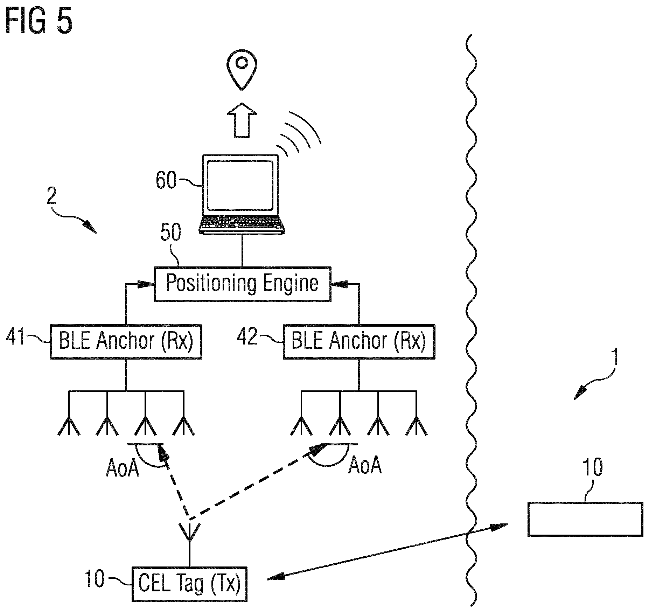

Figure 5 shows an exemplary scenario for hybrid localization. The device 10 is shown, which transitions back and forth between the first area 1 and the second area 2. In the second area 2 the device 10 is in the second mode of operation, as detailed above, sending e.g. BLE 5.1 direction finding packets using its wireless modem. Said direction finding packets are received by a first and a second anchor point 41, 42. Each of these anchor points 41, 42 performs an angle of arrival measurement and provides its measurement results to a positioning engine 50. The positioning engine 50 converts these measurement results and optionally additional RSSI measurement information to determine the position of the device 10. Said information may be provided to and used by an exemplary PC application implemented on a PC 60. As soon as the device 10 transitions to the first area 1, the first technology for localization, for example a cellular telecommunication technology or a GNSS service, is employed for determining the position of the device 10.

Hybrid and seamless localization of the device 10 is enabled up to a submeter accuracy in the second area 2 by using the method as proposed. Additionally, the device 10 can be realized with reduced form factor compared with the state of the art.

It will be appreciated that the invention is not limited to the disclosed embodiments and to what has been particularly shown and described hereinabove. Rather, features recited in separate dependent claims or in the description may advantageously be combined. Furthermore, the scope of the invention includes those variations and modifications which will be apparent to those skilled in the art and fall within the scope of the appended claims. The term "comprising" used in the claims or in the description does not exclude other elements or steps of a corresponding feature or procedure. In case that the terms "a" or "an" are used in conjunction with features, they do not exclude a plurality of such features. Moreover, any reference signs in the claims should not be construed as limiting the scope.

### Reference list

- A, B, C, D: step
- 1, 2: area
- 10: device
- 11: RF port
- 20: wireless modem
- 21: analogue front end circuit
- 22: analogue baseband circuit
- 30: processing unit
- t1, t2, .... t8: point in time
- 41, 42: anchor point
- 50: positioning engine
- 60: PC

## Claims

1. Method for hybrid localization in a first area and in a second area, the method being executed by a device and comprising the following steps:
operating (A) the device in a first mode of operation, while
the device is in the first area in which a wireless communication is available,
detecting (B) that the device transitions from the first area to the second area in which a short range radio signal transmission is available, and
switching (C) the device to a second mode of operation upon detection that the device transitions from the first area to the second area,
wherein in the first mode of operation the device uses a first technology for localization, and
wherein in the second mode of operation the device uses at least a second technology for localization in which the device emulates the short range radio signal transmission during at least one idle period of the wireless communication,
wherein in the second mode of operation the device emulates a Bluetooth Low Energy positioning during the at least one idle period of the wireless communication by sending at least one Bluetooth direction finding packet during the at least one idle period of the wireless communication.

2. Method according to claim 1,
wherein the at least one idle period of the wireless communication is a timespan during which no transmission on the wireless communication occurs.

3. Method according to claim 2,
wherein the at least one idle period of the wireless communication conforms to a discontinuous reception, DRX, or an enhanced/extended DRX, eDRX, connected mode DRX, cDRX, or a power save mode, PSM, or a wake-up signal period, or a wake-up signal duration.

4. Method according to any of claims 1 to 3,
wherein the device employs a wireless modem implementing bidirectional wireless communication according to a standard for the wireless communication, e.g. as defined by the third generation partnership project, 3GPP, and
wherein in the second mode of operation the device employs said wireless modem for sending at least one Bluetooth direction finding packet during the at least one idle period, the at least one Bluetooth direction finding packet comprising a constant tone extension, CTE, and a packet data unit, PDU.

5. Method according to any of claims 1 to 4,
wherein a duration of the at least one idle period is adjusted by way of negotiation.

6. Method according to any of claims 1 to 5,
further comprising detecting (D) that the device transitions from the second area to the first area and subsequently switching from the second mode of operation to the first mode of operation.

7. Method according to any of claims 1 to 6,
wherein detecting (D) that the device transitions between the first area and the second area comprises an evaluation of a Cell Identification, CellID, or using a geo-fence service, or using a radio frequency, RF, fingerprinting or using a Global Navigation Satellite System, GNSS, service.

8. Method according to any of claims 1 to 7,
wherein the first technology for localization comprises at least one of the following: a Global Navigation Satellite Service, GNSS, a cellular telecommunication technology, a wireless communication technology.

9. Device (10) for hybrid localization in a first area and in a second area,
wherein the device (10) is configured to operate in a first mode of operation while the device (10) is in a first area in which a wireless communication is available, the device (10) is further configured to operate in a second mode of operation while the device (10) is in a second area in which a short range radio signal transmission is available,
wherein in the first mode of operation the device (10) is configured to use a first technology for localization, and
wherein in the second mode of operation the device (10) is configured to use at least a second technology for localization, wherein the second technology comprises emulating the short range radio signal transmission during at least one idle period of the wireless communication, wherein in the second mode of operation the device (10) is configured to emulate a Bluetooth Low Energy positioning during the at least one idle period of the wireless communication by sending at least one Bluetooth direction finding packet during the at least one idle period of the wireless communication.

10. Device according to claim 9, comprising
a wireless modem (20) which is configured to provide a bidirectional wireless communication capability according to a wireless communication standard, e.g. as defined by the third generation partnership project, 3GPP, in the first mode of operation, and
a processing unit (30) which is configured to provide at least one packet having localization enabling information to the wireless modem in the second mode of operation, the packet conforming to the short range radio signal transmission.

11. Device according to claim 10,
wherein the packet comprises the at least one Bluetooth direction finding packet according to a Bluetooth Low Energy standard, and
wherein the wireless modem is configured to provide a baseband transmission capability for the Bluetooth direction finding packet, to provide an up conversion for the direction finding packet to at least one Bluetooth advertising frequency channel, and to provide an output power to the up converted Bluetooth direction finding packet according to the Bluetooth Low Energy standard.

12. Device according to any of claims 9 to 11,
wherein the device (10) is implemented in a single chip.

13. Device according to any of claims 9 to 12,
wherein the device (10) is free from a dedicated short range radio signal transmission modem, especially a Bluetooth Low Energy modem.

## Patentansprüche

1. Verfahren zur hybriden Lokalisierung in einem ersten Bereich und in einem zweiten Bereich, wobei das Verfahren von einem Gerät ausgeführt wird und die folgenden Schritte umfasst:
Betreiben (A) des Geräts in einem ersten Betriebsmodus, während sich das Gerät in dem ersten Bereich befindet, in dem eine drahtlose Kommunikation verfügbar ist,
Erkennen (B), dass das Gerät von dem ersten Bereich in den zweiten Bereich übergeht, in dem eine Kurzstrecken-Funksignalübertragung verfügbar ist, und
Umschalten (C) des Geräts in einen zweiten Betriebsmodus bei Erkennung, dass das Gerät von dem ersten Bereich in den zweiten Bereich übergeht,
wobei das Gerät im ersten Betriebsmodus eine erste Technologie zur Lokalisierung verwendet und
wobei das Gerät im zweiten Betriebsmodus mindestens eine zweite Technologie zur Lokalisierung verwendet, bei der das Gerät die Kurzstrecken-Funksignalübertragung während mindestens einer Leerlaufperiode der drahtlosen Kommunikation emuliert,
wobei das Gerät im zweiten Betriebsmodus eine Bluetooth-Low-Energy-Positionierung während der mindestens einen Leerlaufperiode der drahtlosen Kommunikation emuliert, indem es mindestens ein Bluetooth-Peilungspaket während der mindestens einen Leerlaufperiode der drahtlosen Kommunikation sendet.

2. Verfahren nach Anspruch 1,
wobei die mindestens eine Leerlaufperiode der drahtlosen Kommunikation ein Zeitraum ist, in dem keine Übertragung über die drahtlose Kommunikation stattfindet.

3. Verfahren nach Anspruch 2,
wobei die mindestens eine Leerlaufperiode der drahtlosen Kommunikation einer diskontinuierlichen Empfangsperiode, DRX, oder einer erweiterten/verlängerten DRX, eDRX, einer verbundenen Modus-DRX, cDRX, oder einem Energiesparmodus, PSM, oder einer Wecksignalperiode oder einer Wecksignaldauer entspricht.

4. Verfahren nach einem der Ansprüche 1 bis 3,
wobei das Gerät ein drahtloses Modem verwendet, das eine bidirektionale drahtlose Kommunikation gemäß einem Standard für die drahtlose Kommunikation implementiert, z. B. wie vom Third Generation Partnership Project, 3GPP, definiert, und wobei das Gerät im zweiten Betriebsmodus das drahtlose Modem verwendet, um mindestens ein Bluetooth-Peilpaket während der mindestens einen Leerlaufperiode zu senden, wobei das mindestens eine Bluetooth-Peilpaket eine konstante Tonverlängerung, CTE, und eine Paketdateneinheit, PDU, umfasst.

5. Verfahren nach einem der Ansprüche 1 bis 4,
wobei eine Dauer der mindestens einen Leerlaufperiode durch Verhandlung angepasst wird.

6. Verfahren nach einem der Ansprüche 1 bis 5,
das ferner das Erfassen (D) umfasst, dass das Gerät vom zweiten Bereich in den ersten Bereich übergeht, und das anschließende Umschalten vom zweiten Betriebsmodus in den ersten Betriebsmodus.

7. Verfahren nach einem der Ansprüche 1 bis 6,
wobei das Erfassen (D), dass das Gerät zwischen dem ersten Bereich und dem zweiten Bereich wechselt, eine Auswertung einer Zellidentifikation, CellID, oder die Verwendung eines Geofence-Dienstes oder die Verwendung eines Hochfrequenz, RF, Fingerabdrucks oder eines globalen Navigationssatellitensystems, GNSS, umfasst.

8. Verfahren nach einem der Ansprüche 1 bis 7,
wobei die erste Technologie zur Lokalisierung mindestens eine der folgenden umfasst: einen globalen Navigationssatellitendienst, GNSS, eine Mobilfunktechnologie, eine drahtlose Kommunikationstechnologie.

9. Gerät (10) zur hybriden Lokalisierung in einem ersten Bereich und in einem zweiten Bereich,
wobei das Gerät (10) eingerichtet ist, in einem ersten Betriebsmodus zu arbeiten, während sich das Gerät (10) in einem ersten Bereich befindet, in dem eine drahtlose Kommunikation verfügbar ist, wobei das Gerät (10) ferner eingerichtet ist, in einem zweiten Betriebsmodus zu arbeiten, während sich das Gerät (10) in einem zweiten Bereich befindet, in dem eine Kurzstrecken-Funksignalübertragung verfügbar ist,
wobei das Gerät (10) im ersten Betriebsmodus eingerichtet ist, eine erste Technologie zur Lokalisierung zu verwenden, und
wobei das Gerät (10) im zweiten Betriebsmodus (10) eingerichtet ist, mindestens eine zweite Technologie zur Lokalisierung zu verwenden, wobei die zweite Technologie das Emulieren der Kurzstrecken-Funksignalübertragung während mindestens einer Leerlaufperiode der drahtlosen Kommunikation umfasst, wobei das Gerät (10) im zweiten Betriebsmodus eingerichtet ist, eine Bluetooth-Low-Energy-Positionierung während der mindestens einen Leerlaufperiode der drahtlosen Kommunikation zu emulieren, indem mindestens ein Bluetooth-Peilungspaket während der mindestens einen Leerlaufperiode der drahtlosen Kommunikation gesendet wird.

10. Gerät nach Anspruch 9, umfassend
ein drahtloses Modem (20), das eingerichtet ist, um eine bidirektionale drahtlose Kommunikationsfähigkeit gemäß einem drahtlosen Kommunikationsstandard, z. B. wie durch das Third Generation Partnership Project, 3GPP, definiert, im ersten Betriebsmodus bereitzustellen, und
eine Verarbeitungseinheit (30), die eingerichtet ist, um dem drahtlosen Modem im zweiten Betriebsmodus mindestens ein Paket mit Lokalisierungsinformationen bereitzustellen, wobei das Paket der Kurzstrecken-Funksignalübertragung entspricht.

11. Gerät nach Anspruch 10,
wobei das Paket das mindestens eine Bluetooth-Peilpaket gemäß einem Bluetooth-Low-Energy-Standard umfasst, und
wobei das drahtlose Modem eingerichtet ist, um eine Basisbandübertragungsfähigkeit für das Bluetooth-Peilpaket bereitzustellen, um eine Aufwärtskonvertierung für das Peilpaket auf mindestens einen Bluetooth-Anbietefrequenzkanal bereitzustellen und um eine Ausgangsleistung für das aufwärtskonvertierte Bluetooth-Peilpaket gemäß dem Bluetooth-Low-Energy-Standard bereitzustellen.

12. Gerät nach einem der Ansprüche 9 bis 11,
wobei das Gerät (10) in einem einzigen Chip implementiert ist.

13. Gerät nach einem der Ansprüche 9 bis 12,
wobei das Gerät (10) frei von einem dedizierten Modem für die Übertragung von Kurzstreckenfunksignalen, insbesondere einem Bluetooth Low Energy-Modem, ist.

## Revendications

1. Procédé de localisation hybride dans une première zone et dans une deuxième zone, le procédé étant exécuté par un dispositif et comprenant les étapes suivantes :
faire fonctionner (A) le dispositif dans un premier mode de fonctionnement, tandis que le dispositif se trouve dans la première zone dans laquelle une communication sans fil est disponible,
détecter (B) que le dispositif passe de la première zone à la deuxième zone dans laquelle une transmission de signaux radio à courte portée est disponible, et
commuter (C) le dispositif vers un deuxième mode de fonctionnement lors de la détection que le dispositif passe de la première zone à la deuxième zone,
dans lequel, dans le premier mode de fonctionnement, le dispositif utilise une première technologie pour la localisation, et
dans lequel, dans le deuxième mode de fonctionnement, le dispositif utilise au moins une deuxième technologie pour la localisation dans laquelle le dispositif émule la transmission de signaux radio à courte portée pendant au moins une période d'inactivité de la communication sans fil,
dans lequel, dans le deuxième mode de fonctionnement, le dispositif émule un positionnement Bluetooth Low Energy pendant au moins une période d'inactivité de la communication sans fil en envoyant au moins un paquet de radiogoniométrie Bluetooth pendant au moins une période d'inactivité de la communication sans fil.

2. Procédé selon la revendication 1,
dans lequel la au moins une période d'inactivité de la communication sans fil est un intervalle de temps pendant lequel aucune transmission sur la communication sans fil n'a lieu.

3. Procédé selon la revendication 2,
dans lequel la au moins une période d'inactivité de la communication sans fil est conforme à une réception discontinue, DRX, ou à un DRX amélioré/étendu, eDRX, à un DRX en mode connecté, cDRX, ou à un mode d'économie d'énergie, PSM, ou à une période de signal de réveil, ou à une durée de signal de réveil.

4. Procédé selon l'une des revendications 1 à 3,
dans lequel le dispositif utilise un modem sans fil mettant en œuvre une communication sans fil bidirectionnelle selon une norme pour la communication sans fil, par exemple telle que définie par le projet de partenariat de troisième génération, 3GPP, et
dans lequel, dans le deuxième mode de fonctionnement, le dispositif utilise ledit modem sans fil pour envoyer au moins un paquet de radiogoniométrie Bluetooth pendant au moins une période d'inactivité, ledit au moins un paquet de radiogoniométrie Bluetooth comprenant une extension de tonalité constante, CTE, et une unité de données par paquets, PDU.

5. Procédé selon l'une des revendications 1 à 4,
dans lequel la durée de la au moins une période d'inactivité est ajustée par voie de négociation.

6. Procédé selon l'une des revendications 1 à 5,
comprenant en outre la détection (D) du passage du dispositif de la deuxième zone à la première zone, puis le passage du deuxième mode de fonctionnement au premier mode de fonctionnement.

7. Procédé selon l'une des revendications 1 à 6,
dans lequel la détection (D) du passage du dispositif entre la première zone et la deuxième zone comprend une évaluation d'une identification de cellule, CellID, ou l'utilisation d'un service de géorepérage, ou l'utilisation d'une empreinte radiofréquence, RF, ou l'utilisation d'un service de système mondial de navigation par satellite, GNSS.

8. Procédé selon l'une des revendications 1 à 7,
dans lequel la première technologie de localisation comprend au moins l'une des technologies suivantes : un service de navigation par satellite mondial, GNSS, une technologie de télécommunication cellulaire, une technologie de communication sans fil.

9. Dispositif (10) pour la localisation hybride dans une première zone et dans une deuxième zone,
dans lequel le dispositif (10) est configuré pour fonctionner dans un premier mode de fonctionnement lorsque le dispositif (10) se trouve dans une première zone dans laquelle une communication sans fil est disponible, le dispositif (10) étant en outre configuré pour fonctionner dans un deuxième mode de fonctionnement lorsque le dispositif (10) se trouve dans une deuxième zone dans laquelle une transmission de signaux radio à courte portée est disponible,
dans lequel, dans le premier mode de fonctionnement, le dispositif (10) est configuré pour utiliser une première technologie de localisation, et
dans lequel, dans le deuxième mode de fonctionnement, le dispositif (10) est configuré pour utiliser au moins une deuxième technologie pour la localisation, dans lequel la deuxième technologie comprend l'émulation de la transmission de signaux radio à courte portée pendant au moins une période d'inactivité de la communication sans fil, dans lequel, dans le deuxième mode de fonctionnement, le dispositif (10) est configuré pour émuler un positionnement Bluetooth Low Energy pendant au moins une période d'inactivité de la communication sans fil en envoyant au moins un paquet de radiogoniométrie Bluetooth pendant au moins une période d'inactivité de la communication sans fil.

10. Dispositif selon la revendication 9, comprenant un modem sans fil (20) qui est configuré pour fournir une capacité de communication sans fil bidirectionnelle selon une norme de communication sans fil, par exemple telle que définie par le projet de partenariat de troisième génération, 3GPP, dans le premier mode de fonctionnement, et
une unité de traitement (30) qui est configurée pour fournir au moins un paquet contenant des informations permettant la localisation au modem sans fil dans le deuxième mode de fonctionnement, le paquet étant conforme à la transmission de signaux radio à courte portée.

11. Dispositif selon la revendication 10,
dans lequel le paquet comprend au moins un paquet de radiogoniométrie Bluetooth conformément à une norme Bluetooth Low Energy, et
dans lequel le modem sans fil est configuré pour fournir une capacité de transmission en bande de base pour le paquet de radiogoniométrie Bluetooth, pour fournir une conversion ascendante pour le paquet de radiogoniométrie vers au moins un canal de fréquence de publicité Bluetooth, et pour fournir une puissance de sortie au paquet de radiogoniométrie Bluetooth converti vers le haut conformément à la norme Bluetooth Low Energy.

12. Dispositif selon l'une des revendications 9 à 11,
dans lequel le dispositif (10) est mis en œuvre dans une seule puce.

13. Dispositif selon l'une des revendications 9 à 12,
dans lequel le dispositif (10) est exempt de modem dédié à la transmission de signaux radio à courte portée, en particulier d'un modem Bluetooth Low Energy.
